# EUROPEAN PATENT SPECIFICATION

(11) **EP 3 060 067 B1**
(45) Date of publication and mention of the grant of the patent: **03.01.2018**
(21) Application number: 13817747.2
(22) Date of filing: 21.10.2013
(51) Int. Cl.: A23F 5/20

(54) **PROCESS FOR REMOVING CAFFEINE FROM GREEN COFFEE AND PLANT FOR IMPLEMENTING THE PROCESS**
VERFAHREN ZUR ENTFERNUNG VON KOFFEIN AUS ROHKAFFEE UND ANLAGE ZUR DURCHFÜHRUNG DES VERFAHRENS
PROCÉDÉ POUR RETIRER LA CAFÉINE DE CAFÉ VERT, ET USINE POUR METTRE EN OEUVRE LE PROCÉDÉ

(43) Date of publication of application: 31.08.2016
(73) Proprietor: Demus Lab s.r.l., 34147 Trieste (IT)
(72) Inventor: DESOBGO NGUEPI, Yves Clyford, I-34147 Trieste (IT); FABIAN, Massimiliano, I-34147 Trieste (IT); MARCHESAN, Ennio, I-34147 Trieste (IT); TRAUNINI, Stefano, I-34147 Trieste (IT)
(74) Representative: Ferraiolo, Ruggero
(86) International application number: PCT/IT2013/000295
(87) International publication number: WO 2015/059722

(56) References cited:
- CA-A1- 1 015 208
- GB-A- 1 596 587
- US-A- 4 031 251
- US-A- 4 160 042
- US-A- 4 508 743
- US-A- 4 938 977

## Description

### Field of the invention.

The present invention relates to a process and a plant for removing caffeine from green coffee.

### State of the art.

As well known, the market offers both coffee containing its own natural percentage of caffeine and coffee referred to as "decaffeinated" obtained by removing caffeine from green coffee or raw coffee.

The good processes used for removing caffeine from green coffee are basically belonging to four different types and are numerous. The process object of the present patent application is a "water process", in particular a process by water and active carbons, and the known processes of this type and closest to the one invented are implemented and probably patented by firms Swiss Water and Nestlé.

Consider that one of the drawbacks of the "water processes" is that of removing from coffee, in addition to caffeine, many water-soluble aromatic substances that would help to give the coffee, roasted and served in a cup, the well appreciated aroma.

In the process of Swiss Water, each batch of green coffee is treated in an aqueous solution, caffeine-free and rich in coffee aromatic substances.

The process of Nestle provides for the passage of the aqueous solution through one or more extractors in series loaded with green coffee before the solution proceeds to one or more columns of active carbons in series without then making it to return into the extractors, by extractor being intended a container in which hot water removes caffeine from coffee beans

The main drawback in the Swiss Water process lies in the potential alteration of the aromatic profile of the product obtained when the coffee batches under process are of origins different from those used for preparing the aromatic solution used for decaffeination.

The main disadvantage of the Nestlé process is to extract most of the water-soluble substances together with caffeine. Indeed, in this process the amount of water-soluble aromatic substances extracted from the coffee is strong, and then the next phase of reincorporation of these substances into the coffee is of limited efficacy and long in terms of time.

### Scopes of the invention.

The main scopes of the invention are to obtain a product organoleptically superior to the standard ones obtained with the known water processes, in an economically sustainable way and with a high degree of decaffeination, not least that of obtaining a complete saturation of the active carbons with a consequent reduction of the cost for their regeneration.

### Disclosure of the invention

According to the invented process, a batch of green coffee is introduced into a container-extractor (hereinafter referred to as "extractor") containing softened water maintained at a conventional work temperature and under constant mixing where the coffee beans are left in the hot water for the time period necessary for their swelling in order to allow the transfer into the hot water of part of the caffeine and aromatic water-soluble substances contained in the coffee, so forming what will be hereinafter referred to as "solution", the process being characterized in that transfer of other caffeine quantity is achieved from the solution to the activated carbons and a phase follows that diffuses within the coffee beans, now decaffeinated, in the process, the aromatic substances previously transferred from the coffee to the hot water, a slight vacuum ranging from 0.65 to 0.99 bar being created in the extractor that helps this phase that in the following will be simply called "reincorporation".

So it is realized that, as a basic step in the process, after a certain time during which the hot water and the coffee have been in contact in the extractor, as necessary for the completion of the coffee swelling and before the reincorporation phase, the solution was made to pass through activated carbons in order to be decaffeinated and forwarded again in the extractor according to a known circuit movement called "Merry-Go-Round".

It so happens then that the coffee releases caffeine into the hot water and the latter is forwarded to the containers of activated carbons that retain the caffeine. The invented process gets an equilibrium between residual caffeine in the coffee and residual caffeine in the aqueous solution so as to obtain a decaffeinated coffee having a final caffeine content of not more than 0.1%.

The solution, once depleted of caffeine, is transferred from the extractor in a concentration plant and put back again into the extractor held under a slight vacuum ranging from 0.65 to 0.99 bar where the pre-dried coffee reincorporates the most of the water-soluble aromatic substances.

The process ends with a final drying and cooling of the coffee.

The weight ratio water/coffee is conventionally comprised, as mentioned in the patent NT - U.S. 4,508,743, between 3/1 and 15/1. The weight of activated carbons is generally 18 - 36% of that of the green coffee to be decaffeinated and, as suggested by the above patent, the working temperature of the aqueous solution is preferably comprised between 60° C and 90° C.

The extractor is a container comprising softened water at ambient temperature or already brought to a desired temperature in an upstream heating means. The extractor also comprises in its lower part a porous septum suitable to prevent the exit of coffee beans and let the solution and the non water-soluble substances, like coffee films, to pass through. As to columns, before entering them, the solution is passed through a filter provided with meshes between 50 and 250 micrometers which retain the non soluble substances like the coffee chaff.
The process can be conducted in two different ways. +

In a first way, the solution is passed through a container of activated carbons and put-back again in the extractor for a time sufficient to obtain the desired degree of decaffeination. This way is considered as a one-stage process.

In the one-stage process, on ending the predetermined time period for the recirculation through the container of active carbons already partially saturated, container hereinafter simply referred to as "first column", the solution is transferred in one or more containers of fresh active carbons, hereinafter referred to simply as "second column/s".

In a second way, the solution is still passed through the activated carbons, but in two subsequent stages; in a first stage, using active carbons already partially saturated with caffeine from a previous batch and, in a second stage, using fresh active carbons. This way is considered as a two-stage process.

The above mentioned two stages in the second way of proceeding are described here below, with the premise that the flow of the solution in the active carbons containers can be arranged both "upwards" and "downwards", i.e., the solution can be fed both from the bottom upwards and from the top to bottom of the carbons bed through distributors with filtering effect. In the case in which it is used a flow "downwards", the minimum level of the aromatic solution is ensured by an outlet pipe U inverted. The solution recirculation flow is measured and adjusted so as to get an adequate recirculation.

The operation is interrupted for changing the filter once the pressure drop in the system becomes excessive or, without interrupting the operation, the clogged filter is isolated and a fresh alternative filter is activated, mounted in parallel with the other.

In the two-stage process, the removal of caffeine entails that the solution coming from the first column, where carbons are already saturated to their maximum, is passed through the second columns and recirculated back into the extractor. This procedure will be hereafter referred to as "recirculation". Once the predetermined recirculation time period is finished, the solution is diverted to a concentration apparatus in order to start the concentration step, the recirculation time through the second columns being in general higher than that chosen for the recirculation in the first column.

The passage of the solution through the columns is done in series if the control on line of the caffeine contents shows a value higher than expected, this passage being optionally feasible in parallel in the said conditions.

After completely removing the solution from the extractor, the coffee pre-drying phase can start until a humidity between 10% and 45% is reached.

In summary, the process comprises the phases claimed in the claims.

### The advantages of the process

The invented process provides many benefits. The reincorporation of aromatic substances in the coffee is optimized thanks to the slight vacuum ranging from 0.65 to 0.99 bar generated into the extractor, preferably by means of a peristaltic pump. Furthermore, the fact the stirrer blades, which give the mass aromatic solution and coffee a continuous motion upwards and downwards within the extractor, causes that the circuit movement of the solution between the activated carbons and the extractor, circuit movement already mentioned and called "Merry-Go-Round", increases the speed in removing caffeine from coffee and eliminates the risk of formation of preferential passages through the coffee bed in the extractor. So, not only a homogeneously decaffeinated coffee but also and especially a particularly clean coffee is produced thanks to the mechanical action exerted by the stirrer blades into the extractor. These effects are of fundamental importance in the delicate phase of reincorporation of the aromas previously extracted from the coffee. In fact, if there was the presence of films or of not water soluble substances during reincorporation, "slime" would form that would prevent the homogeneous reincorporation of the coffee aromas and produce a little aromatic decaffeinated coffee and the presence of many solids on the outer surface of the beans. Moreover, the condensed water during the concentration phase is recovered and reused as coffee swelling water in the batch of coffee to be subsequently treated. Finally, in the case of the process described later in Example 2, a significant lower consumption of active carbons is achieved because their absorption capacity is fully utilized with consequent reduction of the costs of the next phase for regenerating the exhaust carbons.

### Examples of embodiments.

The invented process will now be illustrated in detail by examples of the two different types of process as described above.

### Example 1.

Two-stage process-In an extractor of 50 L capacity, equipped with heating coils and a stirrer, 10 kg of green coffee are loaded along with 30 kg of softened water heated up to a temperature of 85° C. After one hour, the solution prepared therein is passed at a rate of 60 L/hour through a column loaded with 3.65 kg of fresh activated carbons of GAC type (granular activated carbon) . At the end of each predetermined recirculation time period, the coffee is pre-dried and the solution is concentrated and reforwarded to the extractor to be reincorporated into the coffee. In the attached Table 1 the values are reported of residual caffeine in the coffee reincorporated until a residual value of 0.04% is reached.

### Example 2. +

One stage process - The procedure described in Example 1 is repeated, with some changes. Indeed, in this case the solution is first passed for 2 hours through a first column loaded with 1.6 kg of activated carbons pre-saturated in a previous batch of coffee where the recirculation time period was 4 hours. At the end of the first recirculation, the solution is forwarded to a second column loaded with 1.6 kg of fresh active carbons. The recirculation time period through the second column is 4 hours. The recirculation flow is 60 L / hour. In the attached Table 2 the values are reported of residual caffeine in the coffee reincorporated until a residual value of 0.04% is reached.

The processes described in the previous examples were compared with a conventional process where the coffee is not subject to the mechanical action of the stirrer, but remains stationary so forming a bed of coffee beans. It was found that the advantage in term of remotion of non-soluble substances, such as the chaff present during the stage of reincorporation carried out in a drum provided with a stirrer, is all in favour of a plant where the extractor is provided with stirrers which lead to a lower quantity of non-soluble substances in the solution. The quantity of eliminated non-soluble substances ranges from 0.5% and 1.2% of the weight of the coffee. The absence of a stirrer causes a low aromatic profile in the stage of tasting a batch of decaffeinated coffee.

### Reincorporation of water-soluble substances

In this phase of reincorporation, the pre-dried coffee is put in contact with the aromatic solution previously concentrated. A recirculation pump is used for moving aromas to be reincorporated, preferably a peristaltic pump, extracting the solution of aromas from the bottom of the extractor, passing through a filter and the pump and putting it in head of the extractor (see attached diagram in the path 1 - 9 - 11 - 1). This pump generates a slight vacuum into the extractor, between 0.65 and 0.99 bar, which helps to maximize the reincorporation of aromatic substances in the coffee.

The complete reincorporation is obtained in two stages:
The first phase, which corresponds to the absorption of the aromatic solution in the coffee, begins with the first contact between pre-dried coffee and solution with concentrated aromas. This phase is considered as completed when the liquid to be reincorporated is totally absorbed by the coffee. The advantage of using a peristaltic pump is that the solution is not in contact with extraneous parts that could pollute and the association of the peristaltic pump with transparent tubes, for example of silicon, is to watch through said tubes the development of the reincorporation phases: an initial step of continuous flow of the aromatic solution up to a discontinuous flow and then a total absence of flow which indicates that the coffee "drank" all the solution. This represents the end of the first reincorporation phase.
The second phase, much longer than the first one in term of time and that in fact has already started during the first phase, regards the diffusion of the aromas from the outer surface of the grains to the "core", the grain innermost part.

This diffusion phenomenon is made easy and possible thanks to the vacuum generated by the aroma recirculation pump which is left running even after the end of the first reincorporation phase.

The diffusion of the aromas more into the grains of decaffeinated coffee avoids an excessive loss of aroma during the next phase of final drying, on the one hand, and during the coffee roasting phase, on the other hand.

For illustration purposes, the results achieved in watching the reincorporation phases are shown here below:
A) Still in an extractor of 50 L capacity, equipped with heating coils and a stirrer, 10 kg of green coffee are loaded therein along with 30 L of softened water brought to a temperature of 85° C. After one hour, the solution is recirculated at a rate of 60 L/hour through a first column loaded with 1.6 kg of active carbons of the type GAC (Granular Activated Carbon) coming from a previous batch of coffee where the recirculation time period was four hours. After two hours, the solution is totally discharged from the extractor and recirculated through a second column loaded with 1.6 kg of fresh active carbons. After four hours, the recirculation of the aromatic solution is stopped and the solution, with a number of Brix equal to about 5%, is separated from the beans. The latter are dried up to about 15% moisture and mixed with the aromatic solution that was concentrated before up to a number of Brix approximately equal to 17%.
   In this case, the reincorporation is done by continuing the mixing between the coffee and the aromatic solution during six hours at 80 ° C, at atmospheric pressure. At the end, the coffee is dried with hot air at 85° C until a moisture content of 10% is achieved. The coffee is then cooled and shows a colour darker than the one of the original coffee.
B) The decaffeination process as described under A) is repeated with a change in the method of reincorporation and in the operating times: in this case the reincorporation takes place while maintaining the mixing between the coffee and the solution at a temperature of 80 ° C and using a peristaltic pump for the recirculation of the concentrated solution. The system remains in slight vacuum between 0.8 and 0.99 bar. After two hours, the coffee absorbed all of the solution. Leaving the peristaltic pump in operation, the process stops after:
   - 5 hours of reincorporation (first phase 2 hours, second phase 3 hours),
   - 6 hours of reincorporation (first phase 2 hours, second phase 4 hours).

At the end of the operation, the coffee is dried to a moisture+content of 10% and cooled.

All the coffee is roasted in a "Petroncini" roaster of 2 kg coffee capacity. Coffees having similar roasting degrees and time periods have been considered. The annexed Table 3 summarizes the results of the group of assessors in the sensory evaluation of a beverage obtained with the brewing method known as "espresso" (a coffee beverage obtained in about 25-30 seconds with warm water around 90° C under pressure from 7 to 10 bar and volume between 25 and 30 ml).

### The plant implementing the process.

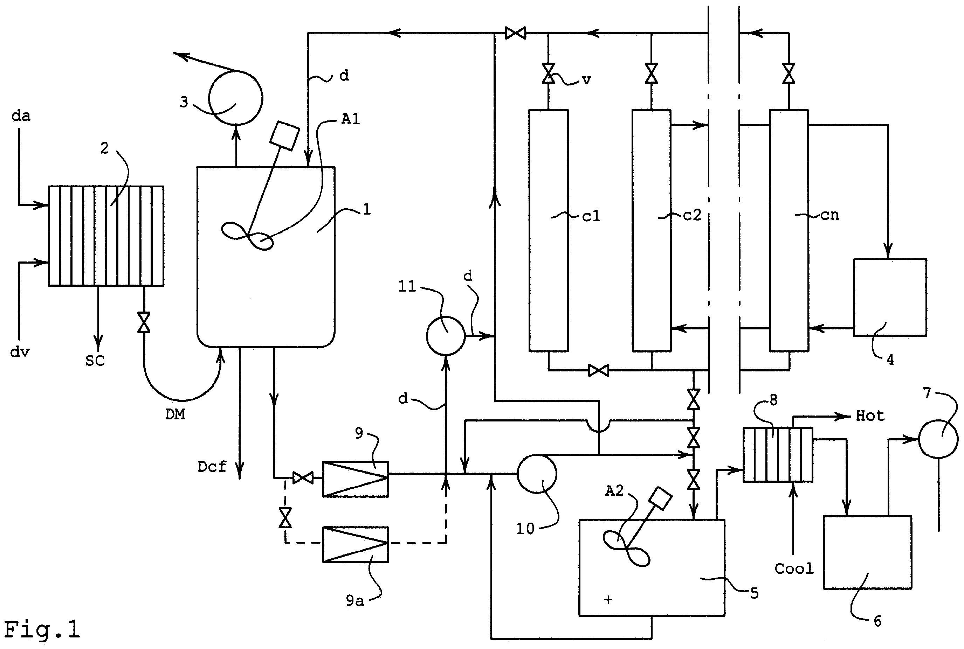

The plant implementing the process comprises the parts that, connected together and controlled manually and/or automatically by means of conduits and valves, are defined in the claims with reference to Figure 1 which diagrammatically illustrates the basic parts of the plant through an example of embodiment.

**Table 1.**

| Recirculation time Min | Residual caffeine in decaffeinated coffee after reincorporation (%) |
|---|---|
| 0 | 1.50 |
| 24 | 1.12 |
| 48 | 0.84 |
| 72 | 0.60 + |
| 96 | 0.48 |
| 120 | 0.36 |
| 144 | 0.26 |
| 168 | 0.20 |
| 192 | 0.16 |
| 216 | 0.12 |
| 240 | 0.08 |
| 264 | 0.06 |
| 288 | 0.05 |
| 312 | 0.05 |
| 336 | 0.04 |
| 360 | 0.04 |

**Table 2.**

| Stadiums | Recirculation time Min | Residual caffeine in decaffeinated coffee after reincorporation (%) |
|---|---|---|
| 1st stage | 0 | 1.50 |
| | 24 | 1.16 |
| | 48 | 0.92 + |
| | 72 | 0.76 |
| | 96 | 0.70 |
| | 120 | 0.68 |
| | Change absorber | |
| 2nd Stage | 144 | 0.44 |
| | 168 | 0.32 |
| | 192 | 0.24 |
| | 216 | 0.18 |
| | 240 | 0.14 |
| | 264 | 0.10 |
| | 288 | 0.08 |
| | 312 | 0.07 |
| | 336 | 0.05 |
| | 360 | 0.04 |

**Table 3**

| Example | Aroma | Body | Taste | Ranking | Average Rating |
|---|---|---|---|---|---|
| 1 | Weak | Weak | Light wood, . Popcorn | 3° | 5.1 |
| 2-A | Medium, Fresh | Acceptable | Balanced, lightweight boiled | 2° | 6.9 |
| 2-B | Good, Fall, Pan roasted | Good | Balanced, aromatic | 1° | + 7.2 |

## Claims

1. Process for removing caffeine from green coffee in which a batch of green coffee is introduced in at least one extractor (1) containing softened water maintained at a conventional working temperature comprised between 60°C and 90° C and the coffee beans in the hot water are left for the time period necessary in that they swell so that caffeine is transferred to the hot water and a solution forms that comprises aromatic softened hot water and part of the transferred caffeine and aromatic water-soluble substances contained in the coffee, where steps are implemented to absorb the caffeine contained in the above aromatic solution as decaffeinated by active carbons placed in at least a suitable container provided at its entry of a filter (9, 9a) suitable to retain undesired solid elements, **characterized in that** it comprises the phases of pre-drying in the extractor (1) the aromatic solution decaffeinated by the active carbons; concentrating said solution in a concentration apparatus (5) and transferring it again into the extractor (1) **held in a vacuum degree (11) ranging from 0,65 to 0.99 bar** that helps the reincorporation of aromatic substances in the pre-dried coffee; drying, cooling and discharge the decaffeinated coffee.

2. Process according to claim 1 **characterized in that** said aromatic solution is kept agitated into the extractor (1) by means of a stirrer means (A1) suitable to impart to the mass "aromatic solution-coffee" a mixing movement, the grains of coffee being retained by a porous septum at the exit of the extractor, while the solution and the coffee films are allowed to pass through said porous septum.

3. Process according to claims 1, 2 **characterized in that** the aromatic solution is first moved in a first container of activated carbons (C1) and, then, one or more times, again in the extractor (1) in which further amounts of caffeine are transferred from the coffee to the solution.

4. Process according to claims 1, 2 **characterized in that** the aromatic solution is first transferred from the extractor (1) to a first container of activated carbons (C1) partially saturated with caffeine and, then, from said first container (C1) in at least a second between several containers (C2-Cn) of fresh active carbons that absorb caffeine and again the solution is transferred one or more times in the extractor (1) in which further amounts of caffeine are transferred from the coffee to the solution, such procedure causing substantially the total saturation of each column of active carbons (C1-Cn). +

5. Process according to claims 1-4 **characterized in that** the containers of active carbons (C2 - Cn) are used in series in the case in which the control on line of the caffeine shows values higher than those expected.

6. Process according to claims 1-4 **characterized in that** the containers of active carbons (C2 - Cn) are used in parallel in case the control on line of the caffeine shows values higher than those expected.

7. Process according to claims 1-6 **characterized in that** the entry of the solution into the containers of active carbons (C1 - Cn) arranged in parallel or in series takes place both from the bottom to the top and from the top to the bottom.

8. Process according to claims 1-4 **characterized in that** the residue of the solution still present in the containers of active carbons (C1-Cn) is totally removed by a suitable pump (10).

9. Process according to claim 1 **characterized in that** the condensed water during the concentration step (5) is recovered and reused as water for swelling the batch of coffee in the coffee to be treated subsequently.

10. Process according to claim 1 **characterized in that** the swelling of the coffee in the extractor (1) is performed by recirculating the water in a loop (1 - 9 - 11 - 1) through the extractor (1), a filter (9) and a pump (11) and putting the water back into the head of the extractor.

11. Process according to claim 1 **characterized in that** the state of vacuum in the extractor (1) is generated by a peristaltic pump (11) when it provides for the recirculation (1 - 9 - 11 - 1) of the aromas to be reincorporated by withdrawing the aromatic solution from the bottom of the extractor (1) and putting it on his head in the same extractor.

12. Plant for implementing the process according to claims 1-11, **characterized in that** it comprises:
- an extractor (1) adapted to contain a mixture of coffee and softened hot water maintained at a desired temperature, provided with means (A1) for imparting to the mixture a mixing movement,
- a first column of active carbon (C1) partially saturated with caffeine suitable to extract caffeine from the solution,
- at least one of a second between several containers (C2-Cn) of fresh active carbons suitable to extract caffeine from the solution,
- a battery (2) fed with a fluid at a controlled temperature, hot to heat air for the extractor (1) in the phases in which the decaffeinated coffee is pre-dried or dried and, alternatively, at room temperature or cooled to bring air at ambient temperature or lower in the phase in which the decaffeinated coffee is definitively cooled,
- a fan (3) associated with the extractor (1) to inhale the air in the phases of pre-drying and drying of the solution and of cooling the coffee,
- means (4) suitable to maintain at the desired temperature the solution circulating in the columns of activated carbons (C1 - Cn),
- a first container (5) provided with a stirrer (A2) for receiving the aromatic solution at the end of the phase of extraction of caffeine and to concentrate the solution before sending it in the extractor (1),
- a second container (6) that collects the water extracted from the solution in the concentration step,
- a first vacuum pump (7) to be activated in the phase of concentration of the solution,
- a condenser (8) suitable to condense the water vapour coming from the first container (5), which is equipped with an input (Cool) for the cooling water and an outlet (Hot) for the heated water,
- a first filter (9) suitable to retain solids that are present in the solution directed to the columns of activated carbons (C1 - Cn),
- a second filter (9a) suitable to retain solid elements that are present in the solution directed to the columns of active carbons (C1 - Cn), which second filter is made operative when the first filter (9) is in maintenance,
- a second pump (10) suitable to circulate the solution present in the columns of active carbon (C1 - Cn), to send in the extractor (1) the aromatic solution which was concentrated in the first container (5) and to completely empty the solution still present in the columns of active carbons (C1 - Cn),
- a third pump (11) suitable to recover the concentrated solution from the bottom of the extractor (1) to send it to the top of the extractor during reincorporation and achieve a vacuum of between 0.65 and 0.99 bar that improves the reincorporation of aromas into the decaffeinated coffee.
- a conduit dA for introducing ambient air into the heating and cooling battery (2),
- a conduit dV for introducing superheated steam into the heating and cooling battery (2),
- a conduit SC for discharging the condensed fluid from the heating and cooling battery (2),
- a conduit dM for sending in the extractor (1) hot or cold air coming from the battery (2),
- an opening Dcf for downloading the decaffeinated coffee from the extractor (1), +
- ducts (d) and valves (v) suitable to implement the process.

13. Plant according to claim 12 **characterized in that** the third pump (11) is a peristaltic pump.

14. Plant according to claim 13, **characterized in that** the peristaltic pump (11) is associated with transparent ducts (d) at least to the downstream.

## Patentansprüche

1. Verfahren zum Entfernen von Koffein aus Rohkaffee, wobei eine Charge von Rohkaffee in mindestens einen Extraktor (1) eingebracht wird, der enthärtetes Wasser enthält, das auf einer konventionellen Arbeitstemperatur zwischen 60 °C und 90 °C gehalten wird, und die Kaffeebohnen in dem heißen Wasser für eine Zeitspanne belassen werden, die erforderlich ist, damit sie aufquellen, sodass Koffein in das heiße Wasser übertragen wird und eine Lösung bildet, die aromatisches enthärtetes heißes Wasser und einen Teil des übertragenen Koffeins und aromatische wasserlösliche Substanzen, die in dem Kaffee enthalten sind, enthält, wobei die Schritte umgesetzt werden, um das in der obigen aromatischen Lösung enthaltene Koffein als durch Aktivkohle entkoffeiniert zu absorbieren, die mindestens in einem geeigneten Behälter platziert ist, der an seinem Eingang mit einem Filter (9, 9a) versehen ist, der geeignet ist, unerwünschte Feststoffe zurückzuhalten, **dadurch gekennzeichnet, dass** es die Phasen einer Vortrocknung der aromatischen Lösung, die durch die Aktivkohle entkoffeiniert wurde, der Konzentration der Lösung in einer Konzentrationsvorrichtung (5) und ihrer Übertragung erneut zu dem Extraktor (1), der in einem Unterdruckgrad (11) gehalten wird, der in dem Bereich von 0,65 bis 0,99 bar liegt, was bei der Wiedereinbringung der aromatischen Substanzen in den vor getrockneten Kaffee hilft, der Trocknung, der Abkühlung und der Austragung des entkoffeiniert Kaffees umfasst.

2. Verfahren nach Anspruch 1, **dadurch gekennzeichnet, dass** die aromatische Lösung in dem Extraktor (1) mittels einer Rühreinrichtung (A1) gerührt gehalten wird, die geeignet ist, um der Masse "aromatische Lösung - Kaffee" eine Mischbewegung zu vermitteln, wobei die Kaffeebohnen durch eine poröses Scheidewand am Ausgang des Extraktors zurückgehalten werden, während die Lösung und Kaffeefilme durch die poröses Scheidewand passieren können.

3. Verfahren nach Anspruch 1, 2, **dadurch gekennzeichnet, dass** die aromatische Lösung zunächst in einen ersten Behälter mit Aktivkohle (C1) bewegt wird und dann ein oder mehrere Male erneut in den Extraktor (1), in dem weitere Anteile von Koffein von dem Kaffee in die Lösung übertragen werden.

4. Verfahren nach Anspruch 1, 2, **dadurch gekennzeichnet, dass** die aromatische Lösung zunächst von dem Extraktor (1) in einen ersten Behälter mit Aktivkohle (C1) übertragen wird, die teilweise mit Koffein gesättigt ist, und dann von dem ersten Behälter (C 1) in mindestens einen zweiten von einigen Behältern (C2-Cn) mit frischer Aktivkohle, die Koffein absorbiert, und wobei die Lösung erneut ein oder mehrere Male in den Extraktor (1) übertragen wird, in dem weitere Anteile von Koffein von dem Kaffee in die Lösung übertragen werden, wobei ein solcher Vorgang im Wesentlichen eine vollständige Sättigung jeder Säule von Aktivkohle (C1-Cn) verursacht.

5. Verfahren nach den Ansprüchen 1-4, **dadurch gekennzeichnet dass** die Behälter der Aktivkohle (C 2-Cn) in Reihe in dem Fall verwendet werden, bei dem die momentane Kontrolle des Koffeins Werte zeigt, die höher als erwartet sind.

6. Verfahren nach Anspruch 1-4, **dadurch gekennzeichnet, dass** die Behälter der Aktivkohle (C 2-Cn) in dem Fall parallel verwendet werden, dass die momentane Kontrolle des Koffeins Werter zeigt, die höher als erwartet sind.

7. Verfahren nach Anspruch 1-6, **dadurch gekennzeichnet, dass** das Einbringen der Lösung in die Behälter der Aktivkohle (C1-Cn) parallel oder in Reihe sowohl von dem Boden zur Oberseite als auch von der Oberseite zu dem Boden vorgenommen wird.

8. Verfahren nach Anspruch 1-4, **dadurch gekennzeichnet, dass** der Rest der Lösung, die noch in den Behältern der Aktivkohle (C1-Cn) enthalten ist, vollständig durch eine geeignete Pumpe (10) entfernt wird.

9. Verfahren nach Anspruch 1, **dadurch gekennzeichnet, dass** das während des Konzentrationsschritts (5) kondensierte Wasser wiedergewonnen wird und als Wasser zum Aufquellen der Charge von Kaffee in dem anschließend zu behandelnden Kaffee verwendet wird.

10. Verfahren Anspruch 1, **dadurch gekennzeichnet, dass** das Aufquellen des Kaffees in dem Extraktor (1) durch Rezirkulation des Wassers in einer Schleife (1 - 9 - 11 - 1) durch den Extraktor (1), einen Filter (9) und eine Pumpe (11) und Leitung des Wassers zurück zum Kopf des Extraktors durchgeführt wird.

11. Verfahren Anspruch 1, **dadurch gekennzeichnet, dass** der Unterdruckzustand in dem Extraktor (1) durch eine Schlauchpumpe (11) erzeugt wird, wenn sie für die Rezirkulation (1 - 9 - 11 - 1) der Aromaten sorgt, die wieder einzubringen sind, durch Abziehen der aromatischen Lösung von dem Boden des Extraktors (1) und ihre Zuführung an seinen Kopf in demselben Extraktor.

12. Anlage zur Umsetzung des Prozesses nach den Ansprüchen 1-11, **gekennzeichnet durch**:
einen Extraktor (1), der ausgebildet ist, um eine Mischung von Kaffee und enthärtetem Wasser zu enthalten, das auf einer gewünschten Temperatur gehalten wird, der mit einer Einrichtung (A1) versehen ist, um der Mischung eine Mischbewegung zu vermitteln,
eine erste Säule von Aktivkohle (C1), die partiell mit Koffein gesättigt ist, die geeignet ist, Koffein aus der Lösung zu extrahieren,
mindestens einem zweiten unter mehreren Behältern (C2-Cn) mit frischer Aktivkohle, die geeignet ist, Koffein aus der Lösung zu extrahieren,
eine Batterie (2), dem ein Fluid bei einer gesteuerten Temperatur zugeführt wird, um Luft für den Extraktor (1) in den Phasen aufzuheizen, in denen der entkoffeinierte Kaffee vorgetrocknet wird oder getrocknet wird und, alternativ, bei Raumtemperatur oder gekühlt, um Luft mit Umgebungstemperatur oder weniger in der Phase zuzuführen, bei der der entkoffeinierte Kaffee definitiv gekühlt wird,
ein Gebläse (3), das dem Extraktor (1) zugeordnet ist, um Luft in den Phasen der Vortrocknung und der Trocknung der Lösung und der Kühlung des Kaffees einzusaugen,
eine Einrichtung (4), die geeignet ist, um die Lösung, die in den Säulen der Aktivkohle (C1-Cn) zirkuliert, bei einer gewünschten Temperatur zu halten,
einen ersten Behälter (5), der mit einer Rühreinrichtung (A2) versehen ist, zur Aufnahme der aromatischen Lösung am Ende der Phase der Extraktion von Koffein und zur Konzentration der Lösung vor der Übertragung in den Extraktor (1),
einen zweiten Behälter (6), der das Wasser, das aus der Lösung in dem Konzentrationsschritt extrahiert wurde, sammelt,
eine erste Unterdruckpumpe (7), die in der Phase der Konzentration der Lösung aktiviert wird,
einen Kondensator (8), der geeignet ist, um den Wasserdampf, der aus dem ersten Behälter (5) kommt, zu kondensieren, der mit einem Eingang (Kalt) für das Kühlwasser und einem Auslass (Heiß) für das geheizte Wasser versehen ist,
einen ersten Filter (9), der geeignet ist, um Feststoffe, die in der Lösung vorhanden sind, die zu den Säulen der Aktivkohle (C1-Cn) gerichtet wird, zurückzuhalten,
einen zweiten Filter (9a), der geeignet ist, um Feststoffe zurückzuhalten, die in der Lösung enthalten sind, die zu den Säulen der Aktivkohle (C1-Cn) gerichtet wird, wobei der zweite Filter aktiviert wird, wenn der erste Filter (9) in Wartung ist,
eine zweite Pumpe (10), die geeignet ist, um die Lösung, die in den Säulen der Aktivkohle (C1-Cn) vorhanden ist, zu zirkulieren und die aromatische Lösung, die in dem ersten Behälter (5) konzentriert wurde, zu dem Extraktor (1) zu führen und die Lösung, die noch in den Säulen der Aktivkohle (C1-Cn) vorhanden ist, vollständig zu entleeren,
eine dritte Pumpe (11), die geeignet ist, die konzentrierte Lösung vom Boden des Extraktors wiederzugewinnen und sie zum Oberteil des Extraktors während der Wiedereinbringung zu führen und um ein einen Unterdruck zwischen 0,65 und 0,99 war zu erzielen, der die Wiedereinbringung der Aromaten in den entkoffeinierten Kaffee verbessert,
eine Leitung dA zur Einbringung von Umgebungsluft in die Heiz- und Kühlbatterie (2),
eine Leitung dV zur Einbringung von überhitztem Dampf in die Heiz- und Kühlbatterie (2),
eine Leitung SC zum Auslass des kondensierten Fluids aus der Heiz- und Kühlbatterie (2),
eine Leitung dM zum Zuführen von heißer oder kalter Luft aus der Batterie (2) in den Extraktor,
eine Öffnung Dcf zum Entladen des entkoffeinierten Kaffees aus dem Extraktor (1),
Leitungen (d) und Ventile (v), die geeignet sind, das Verfahren umzusetzen.

13. Anlage nach Anspruch 12, **dadurch gekennzeichnet, dass** die dritte Pumpe (11) eine Schlauchpumpe ist.

14. Anlage nach Anspruch 13, **dadurch gekennzeichnet, dass** die Schlauchpumpe (11) mindestens stromabseitig mit transparenten Leitungen (d) versehen ist.

## Revendications

1. Procédé permettant d'éliminer la caféine de café vert selon lequel une charge de café vert est introduite dans au moins un extracteur (1) renfermant de l'eau déminéralisée maintenue à une température de travail conventionnelle comprise entre 60°C et 90°C, et les grains de café sont maintenus dans l'eau chaude pendant la durée nécessaire pour qu'ils gonflent de sorte que la caféine soit transférée dans l'eau chaude et qu'il se forme une solution renfermant l'eau chaude déminéralisée aromatique, une partie de la caféine transférée, et des substances aromatiques solubles dans l'eau renfermées dans le café, les étapes étant mises en oeuvre pour absorber la caféine renfermée dans la solution aromatique susmentionnée en la décaféinant par du charbon actif renfermé dans au moins un réservoir adapté muni à son entrée d'un filtre (9, 9a) susceptible de retenir les éléments solides indésirables,
**caractérisé en ce qu'**
il comporte des étapes consistant à pré-sécher dans l'extracteur (1) la solution aromatique décaféinée par le charbon actif, à concentrer cette solution dans un appareil de concentration(5) et à la transférer à nouveau dans l'extracteur (1) maintenu sous un degré de vide (11) situé dans la plage de 0,65 à 0,99 bar facilitant la réincorporation de substances aromatiques dans le café pré-séché, à sécher, à refroidir et à décharger le café décaféiné.

2. Procédé conforme à la revendication 1,
**caractérisé en ce que**
la solution aromatique est maintenue sous agitation dans l'extracteur (1) par des moyens d'agitation (AI) susceptible de communiquer à la masse "solution aromatique-café" un mouvement de mélange, les grains de café étant retenus par une membrane poreuse alors que la solution et les pellicules de café peuvent passer au travers de cette membrane poreuse.

3. Procédé conforme aux revendications 1 et 2,
**caractérisé en ce que**
la solution aromatique passe tout d'abord dans un premier réservoir de charbon actif (C1), puis, une ou plusieurs fois à nouveau dans l'extracteur (1) dans lequel des quantités supplémentaires de caféine sont transférées du café dans la solution.

4. Procédé conforme aux revendications 1 et 2,
**caractérisé en ce que**
la solution aromatique est tout d'abord transférée de l'extracteur (1) dans un premier réservoir de charbon actif (C1) partiellement saturé en caféine puis, de ce premier réservoir (C1) dans au moins un second réservoir parmi plusieurs réservoirs (C2-Cn) de charbon actif frais qui absorbe la caféine, puis la solution est à nouveau transférée ou une plusieurs fois dans l'extracteur (1) dans lequel des quantités supplémentaires de caféine sont transférées du café dans la solution, ce processus entraînant essentiellement la saturation totale de chaque colonne de charbon actif (C1-Cn).

5. Procédé conforme aux revendications 1 à 4,
**caractérisé en ce que**
les réservoirs de charbon actif (C2-Cn) sont utilisés en série lorsque le contrôle en ligne de la caféine révèle des valeurs supérieures à celles attendues.

6. Procédé conforme aux revendications 1 à 4,
**caractérisé en ce que**
les réservoirs de charbon actif (C2-Cn) sont utilisés en parallèle lorsque le contrôle en ligne de la caféine révèle des valeurs supérieures à celles attendues.

7. Procédé conforme aux revendications 1 à 6,
**caractérisé en ce que**
l'introduction de la solution dans les réservoirs de charbon actif (C1-Cn) montés en parallèle ou en série est effectuée à la fois du bas vers le haut et du haut vers le bas.

8. Procédé conforme aux revendications 1 à 4,
**caractérisé en ce que**
le résidu de solution encore présent dans les réservoirs de charbon actif (C1-Cn) est totalement éliminé par une pompe (10) adaptée.

9. Procédé conforme à la revendication 1,
**caractérisé en ce que**
l'eau condensée au cours de l'étape de concentration (5) est récupérée et utilisée en tant qu'eau permettant de faire gonfler les charges de café à traiter ultérieurement.

10. Procédé conforme à la revendication 1,
**caractérisé en ce que**
le gonflement du café dans l'extracteur (1) est effectué en faisant recirculer l'eau en boucle (1-9-11-1) dans l'extracteur (1) un filtre (9) et une pompe (11) puis à nouveau en tête de l'extracteur.

11. Procédé conforme à la revendication 1,
**caractérisé en ce que**
l'état de vide dans l'extracteur (1) est créé par une pompe péristaltique (11) permettant la recirculation (1, 9, 11, 1) des aromes devant être réincorporés en soutirant la solution aromatique par le bas de l'extracteur (1) et en l'y introduisant à sa tête.

12. Installation permettant la mise en oeuvre du procédé conforme aux revendications 1 à 11,
**caractérisée en ce qu'**elle comprend :
- un extracteur (1) susceptible de contenir un mélange de café et d'eau chaude déminéralisée maintenue à une température souhaitée et équipé de moyens (A1) permettant de communiquer au mélange un mouvement de mélange,
- une première colonne de charbon actif (C1) partiellement saturée en caféine susceptible d'extraire de la caféine de la solution,
- au moins un second réservoir parmi un ensemble de réservoirs (C2-Cn) de charbon actif frais susceptible d'extraire de la caféine de la solution,
- un accumulateur (2) alimenté en un fluide à une température contrôlée, chaude pour chauffer de l'air destiné à l'extracteur (1) dans les étapes dans lesquelles le café décaféiné est préséché ou séché, ou, alternativement à la température ambiante ou refroidi pour amener l'air à température ambiante ou à une température inférieure dans les étapes dans lesquelles le café décaféiné est finalement refroidi,
- un ventilateur (3) associé à l'extracteur (1) pour aspirer l'air dans les étapes de préséchage et de séchage de la solution et de refroidissement du café,
- des moyens (4) susceptibles de maintenir à la température souhaitée la solution circulant dans les colonnes de charbon actif (C1-Cn),
- un premier réservoir (5) équipé d'un agitateur (A2) destiné à recevoir la solution aromatique à la fin de l'étape d'extraction de la caféine et à concentrer cette solution avant de l'envoyer dans l'extracteur (1),
- un second réservoir (6) qui recueille l'eau extraite de la solution dans l'étape de concentration,
- une première pompe à vide (7) destinée à être activée dans l'étape de concentration de la solution,
- un condensateur (8) susceptible de condenser la vapeur d'eau provenant du premier réservoir (5) qui est équipé d'une entrée (Cool) de l'eau de refroidissement et d'une sortie (Hot) de l'eau chauffée,
- un premier filtre (9) susceptible de retenir les solides présents dans la solution transférée vers les colonnes de charbon actif (C1-Cn),
- un second filtre (9a) susceptible de retenir les éléments solides présents dans la solution transférée vers les colonnes de charbon actif (C1-Cn), ce second filtre étant rendu opérationnel lorsque le premier filtre (9) est en maintenance,
- une seconde pompe (10) susceptible de faire circuler la solution présente dans les colonnes de charbon actif (C1-Cn) pour envoyer dans l'extracteur (1) la solution aromatique qui a été concentrée dans le premier réservoir (5) et pour vider complètement la solution encore présente dans les colonnes de charbon actif (C1-Cn),
- une troisième pompe (11) susceptible de récupérer la solution concentrée du bas de l'extracteur (1) pour la transférer en haut de cet extracteur lors de la réincorporation, et de créer un vide compris entre 0,65 et 0,99 bar qui améliore la réincorporation des aromes dans le café décaféiné,
- une canalisation dA permettant d'introduire de l'air ambiant dans l'accumulateur de chauffage et de refroidissement (2),
- une canalisation dV permettant d'introduire de la vapeur surchauffée dans l'accumulateur de chauffage et de refroidissement (2),
- une canalisation SC permettant d'extraire le fluide condensé de l'accumulateur de chauffage et de refroidissement (2),
- une canalisation dM permettant d'envoyer dans l'extracteur (1) de l'air chaud ou froid provenant de l'accumulateur (2),
- une ouverture Dcf permettant d'extraire le café décaféiné de l'extracteur (1),
- des conduites (d) et des soupapes (v) adaptées à la mise en oeuvre du procédé.

13. Installation conforme à la revendication 12,
**caractérisée en ce que**
la troisième pompe (11) est une pompe péristaltique.

14. Installation conforme à la revendication 13,
**caractérisée en ce que**
la pompe péristaltique (11) est associée à des conduites transparentes (d) au moins vers l'aval.
